# FASCICULE DE BREVET EUROPEEN

(11) **EP 0 786 922 B1**
(45) Date de publication et mention de la délivrance du brevet: **23.05.2001**
(21) Numéro de dépôt: 97400108.3
(22) Date de dépôt: 20.01.1997
(51) Int. Cl.: H05B 3/50, H05B 3/82, A47J 27/21

(54) **Résistance électrique pour fond chauffant, notamment pour bouilloire**
Elektrisches Widerstandselement für Bodenheizung, insbesonderes für Wasserkochgeräte
Electrical resitance element for bottom heater, particularly for water kettles

(30) Priorité: 25.01.1996 FR 9600867
(43) Date de publication de la demande: 30.07.1997
(73) Titulaire: SEB S.A., 69130 Ecully (FR)
(72) Inventeur: Lacombe, Jacques, 70100 Gray (FR)
(74) Mandataire: Keib, Gérard

(56) Documents cités:
- WO-A-94/18807
- DE-A- 3 545 445
- DE-A- 4 403 638
- FR-A- 815 241
- US-A- 3 082 313
- US-A- 3 715 567

## Description

La présente invention concerne une plaque chauffante électrique pour fond chauffant d'un appareil électrique, tel qu'une bouilloire.

Elle concerne également un fond chauffant équipé d'une telle plaque chauffante et une bouilloire électrique ayant un réservoir à eau, chauffé par son fond.

On connaît de nombreuses plaques chauffantes électriques comprenant une résistance électrique tubulaire de chauffage qui est fixée sous la plaque dans un plan parallèle à celle-ci.

Le fonctionnement d'une telle résistance est généralement commandé par un limiteur thermique auquel sont connectées les deux extrémités de la résistance tubulaire.

Ce limiteur thermique a, comme fonction de base, un rôle de thermostat pour surveiller la température de chauffe de la résistance. Il est donc adapté à mesurer la température de la résistance et à couper l'alimentation électrique de la résistance lorsque sa température dépasse une valeur seuil prédéterminée. A cet effet, le limiteur thermique doit être disposé à proximité de la zone chauffante de la résistance, c'est-à-dire à proximité du milieu de la résistance tubulaire.

Or, afin d'assurer un chauffage homogène de la plaque, les résistances utilisées à ce jour ont toujours eu la forme, soit de fer à cheval, soit de spirale. Les extrémités de la résistance tubulaire sont alors disposées en périphérie de la plaque chauffante. Aussi, la connexion de ces extrémités au limiteur thermique disposé à proximité du milieu de la résistance, nécessite l'utilisation d'organes de connexion électrique additionnels, comme cela est décrit dans le brevet FR-A-2 708 407 déposé par la Demanderesse.

Cet inconvénient apparaît également dans le document WO-A-94 18807 qui divulgue une plaque chauffante constituée par une plaque de circuit imprimé sur laquelle est formée la résistance électrique de chauffe dont une partie suit le contour périphérique de la plaque et dont les extrémités sont disposées au voisinage du centre de celle-ci.

Une forme analogue de résistance électrique de chauffe, réalisée par des éléments tubulaires, est décrite dans le document FR-A-815 241.

Le but de la présente invention est de simplifier la connexion de la résistance au limiteur thermique, en supprimant tout élément de raccord intermédiaire.

La plaque chauffante visée par l'invention comprend une résistance tubulaire qui s'étend sensiblement dans son plan et est adaptée à être fixée sous la plaque chauffante, les extrémités de la résistance étant connectées à un limiteur thermique disposé à proximité du milieu de la résistance et adapté à mesurer au moins la température de la résistance et à couper l'alimentation électrique de la résistance lorsque la température mesurée dépasse une valeur prédéterminée.

Selon l'invention, une portion de la résistance s'étend sensiblement suivant le contour périphérique de cette plaque chauffante, les extrémités de la résistance s'étendant en direction du milieu de la résistance, et étant connectées directement au limiteur thermique.

De plus, la résistance chauffante s'étend à la fois sur la périphérie de la plaque et vers le centre de celle-ci, ce qui favorise une meilleure répartition de l'énergie distribuée à la plaque et permet d'obtenir une diminution de la température intérieure de la résistance chauffante par rapport aux résistances connues.

En outre, la longueur développée de la résistance chauffante est augmentée par rapport à celle des résistances classiques qui s'étendent seulement sur la périphérie de la plaque. La charge spécifique est par conséquent diminuée.

Cette meilleure répartition de l'énergie et cette diminution de la charge spécifique permettent d'augmenter notablement la durée de vie de la résistance à puissance d'utilisation équivalente.

Afin d'améliorer encore la bonne répartition de l'énergie, la résistance électrique est de préférence symétrique par rapport à un axe de symétrie de la plaque chauffante.

La fabrication d'une telle plaque chauffante est alors très simple et ne requiert aucun élément supplémentaire autre que la résistance elle-même et le limiteur thermique.

Selon un autre aspect de l'invention, une bouilloire électrique à fond chauffant, comprenant un réservoir de liquide à chauffer ayant un fond sous lequel sont fixés un limiteur thermique et une résistance électrique, est caractérisée en ce que la résistance est conforme à la présente invention.

D'autres particularités et avantages de l'invention apparaîtront encore dans la description ci-après.

Aux dessins annexés donnés à titre d'exemples non limitatifs :
- la figure 1 est une vue en coupe d'une bouilloire électrique conforme à l'invention;
- les figures 2 et 3 sont des vues de dessous de plaques chauffantes équipées d'une résistance électrique connue de l'art antérieur; et
- la figure 4 est une vue de dessous de la plaque chauffante équipée d'une résistance électrique conforme à l'invention.

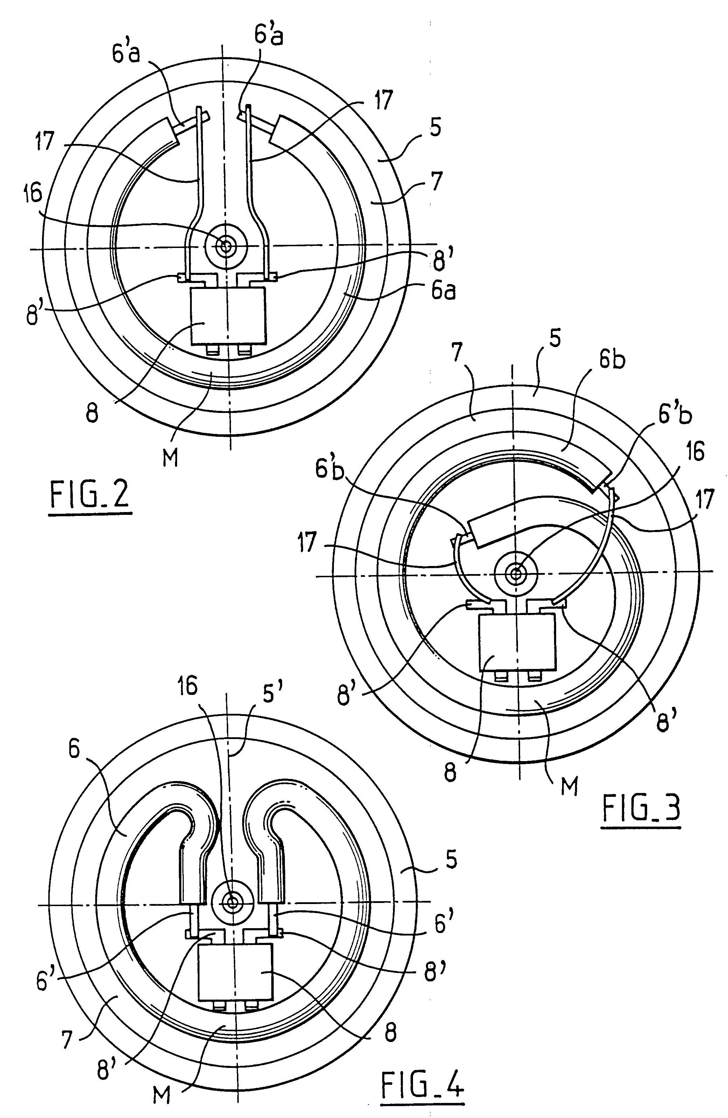

On va tout d'abord décrire rapidement les résistances tubulaires de l'art antérieur, utilisées pour équiper une plaque chauffante, en référence notamment aux figures 2 et 3.

Une plaque chauffante 5, qui, dans ces exemples, a une forme de disque, supporte une résistance électrique tubulaire 6a, 6b et un limiteur thermique 8 ayant au moins un rôle de thermostat à l'égard de la résistance 6a, 6b. Une telle plaque est par exemple décrite dans le brevet FR 2 708 407.

A la figure 2, la résistance 6a a sensiblement la forme d'un fer à cheval alors qu'à la figure 3, elle est enroulée en forme de spirale.

Ces résistances 6a, 6b, de formes connues ont pour inconvénient d'avoir une ou deux extrémités de connexion 6'a, 6'b, disposées à la périphérie de la plaque 5, et en tout cas éloignées du milieu M de la résistance tubulaire 6a, 6b.

La connexion de ces extrémités 6'a, 6'b aux pattes de connexion 8' du limiteur thermique 8, doit alors être réalisée par des raccords intermédiaires 17.

Selon l'invention, en référence à la figure 4, une portion de la résistance 6 s'étend sensiblement suivant le contour périphérique de la plaque 5, les extrémités 6' de cette résistance 6 s'étendant en direction du milieu M de la résistance 6.

Cette forme particulière de résistance 6 permet de connecter directement des extrémités 6' de la résistance 6 aux pattes de connexion 8' du limiteur thermique.

De préférence, la résistance 6 est symétrique par rapport à un axe de symétrie 5' de la plaque chauffante 5.

Cette caractéristique favorise l'homogénéité du chauffage de la plaque 5.

Dans cet exemple, la plaque chauffante 5 a une forme de disque.

La résistance électrique 6 a une forme circulaire quasi-fermée, les extrémités 6' de la résistance s'étendant parallèlement à un axe de symétrie 5' de la résistance.

Ainsi, la majeure partie de la résistance 6 s'étend suivant le contour périphérique de la plaque 5, les extrémités 6' étant recourbées vers l'intérieur du cercle formé par la résistance 6.

L'axe de symétrie 5' correspond au diamètre du cercle fermé par la résistance 6 et passant par son milieu M.

Le limiteur thermique 8 est alors positionné à l'intérieur du cercle formé par la résistance 6, à proximité de son milieu M.

De préférence, et afin d'obtenir un chauffage homogène et rapide de la plaque 5, une plaque de diffusion thermique,de bonne conductibilité thermique, est fixée entre la plaque chauffante 5, d'une part, et la résistance 6 et le limiteur thermique 8, d'autre part.

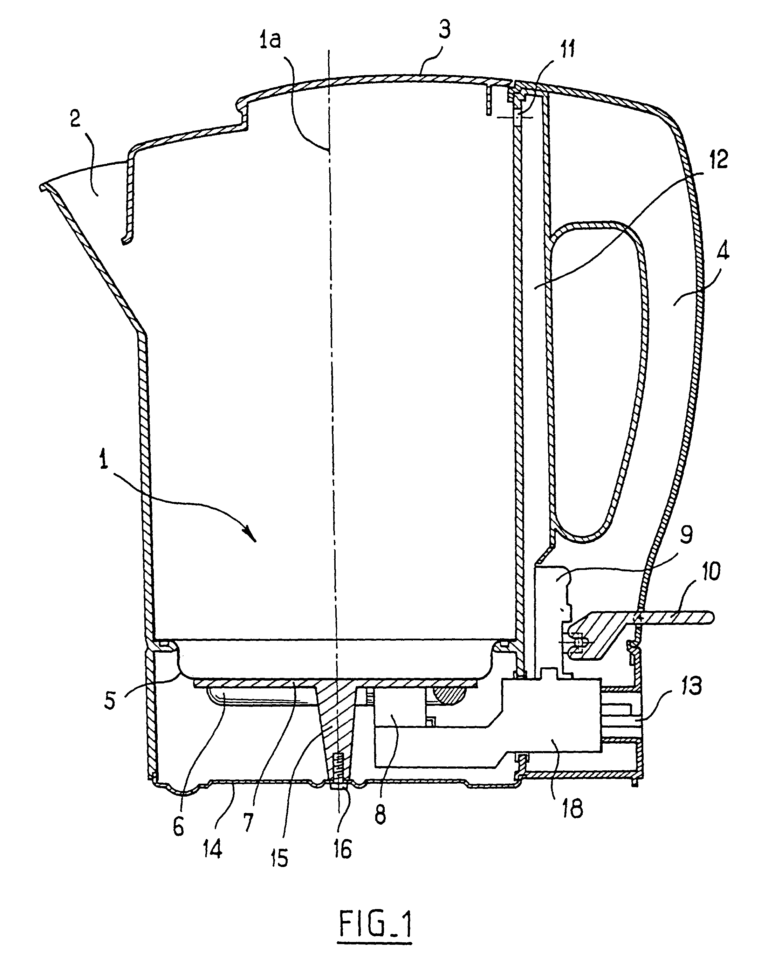

Ce type de plaque chauffante représentée à la figure 4 peut, à titre d'exemple, équiper une bouilloire électrique à fond chauffant, telle qu'illustrée à la figure 1.

De manière connue, cette bouilloire comprend un réservoir d'eau 1 ayant un bec verseur 2 et un couvercle 3 au-dessus de son orifice de remplissage.

Sous le fond 5 du réservoir 2, est fixée une plaque de diffusion thermique 7 solidaire en son centre de la base 14 de la bouilloire, par l'intermédiaire d'une vis 16 par exemple vissée dans un pied central 15 de la plaque de diffusion 7.

Le fonctionnement de la résistance 6 est commandé par un organe 10 du type Marche / Arrêt, par l'intermédiaire d'un détecteur de vapeur 9 placé sous un conduit de vapeur 12 débouchant par un orifice 11 en partie haute du réservoir 1.

Des broches de connexion 13 permettent de relier la bouilloire à une source de courant électrique à l'aide d'un cordon d'alimentation amovible.

Un boîtier 18 permet de réaliser les différentes connexions.

Le détecteur d'ébullition 9 et le limiteur thermique 8 sont ainsi, de manière connue, adaptés à réguler le fonctionnement de la résistance électrique 6, et notamment à couper l'alimentation électrique lorsque l'ébullition est détectée ou lorsque la température de la résistance a atteint une valeur maximale prédéterminée.

Le limiteur thermique 8 peut en outre être adapté à mesurer la température du fond 5 et à couper l'alimentation électrique de la résistance 6 lorsque la température mesurée dépasse une valeur prédéterminée. Il a ainsi un rôle de fusible thermique pour éviter la surchauffe du fond 5.

Grâce à la forme de la résistance conforme à l'invention, le limiteur thermique 8 est positionné très simplement à la fois en contact avec le fond 5, éventuellement par l'intermédiaire de la plaque de diffusion thermique 7, et à proximité du milieu M de la résistance 6.

Bien entendu, de nombreuses modifications peuvent être apportées à l'exemple décrit ci-dessus sans sortir du cadre de l'invention.

Ainsi, la plaque chauffante pourrait avoir une forme différente de celle de disque, telle que rectangulaire, ovale....

Elle pourrait également équiper d'autres appareils électrique qu'une bouilloire.

En outre, la bouilloire à fond chauffant pourrait également être alimentée en courant électrique par l'intermédiaire d'un socle d'alimentation.

## Revendications

1. Plaque chauffante électrique comprenant une résistance électrique tubulaire (6) adaptée à être fixée sous la plaque chauffante (5) et s'étendant sensiblement dans un plan parallèle à celle-ci, les extrémités (6') de la résistance (6) étant connectées à un limiteur thermique (8) disposé à proximité du milieu de ladite résistance (6) et adapté à mesurer au moins la température de la résistance et à couper l'alimentation électrique de la résistance (6) lorsque la température mesurée dépasse une valeur prédéterminée, caractérisée en ce qu'une portion de la résistance (6) s'étend sensiblement suivant le contour périphérique de ladite plaque (5), les extrémités (6') de la résistance s'étendant en direction du milieu (M) de la résistance (6), et étant connectées directement au limiteur thermique.

2. Plaque chauffante selon la revendication 1, caractérisée en ce que la résistance (6) est symétrique par rapport à un axe de symétrie (5') de la plaque chauffante (5).

3. Plaque chauffante selon la revendication 1 ou 2, la plaque chauffante (5) ayant une forme de disque, caractérisée en ce que la résistance électrique (6) a une forme circulaire quasi-fermée, les extrémités (6') de la résistance (6) s'étendant parallèlement à un axe de symétrie (5') de ladite résistance.

4. Plaque chauffante selon l'une des revendications 1 à 3, caractérisée en ce qu'une plaque de diffusion thermique (7) est fixée entre la plaque chauffante (5), d'une part, et la résistance (6) et le limiteur thermique (8), d'autre part.

5. Bouilloire électrique à fond chauffant, comprenant un réservoir (1) de liquide à chauffer ayant une plaque chauffante (5) sous lequel sont fixés un limiteur thermique (8) et une résistance électrique (6), caractérisée en ce que la plaque chauffante est conforme à l'une des revendications 1 à 4,

6. Bouilloire électrique selon la revendication 5, caractérisée en ce que le limiteur thermique (8) est en outre adapté à mesurer la température du fond (5) et à couper l'alimentation électrique de la résistance (6) lorsque la température mesurée dépasse une valeur prédéterminée.

## Patentansprüche

1. Elektrische Heizplatte mit einem röhrenförmigen, elektrischen Widerstand (6), der zur Befestigung unter der Heizplatte (5) ausgelegt und der sich im wesentlichen in einer zu dieser parallel verlaufenden Ebene erstreckt, wobei die Enden (6') des Widerstands (6) mit einer thermischen Begrenzungseinrichtung (8) verbunden sind, die in der Nähe der Mitte des Widerstandes (6) angeordnet ist und die dafür ausgelegt sind, mindestens die Temperatur des Widerstandes zu erfassen und die elektrische Versorgung des Widerstands (6) zu unterbrechen, wenn die erfaßte Temperatur einen bestimmten Wert überschreitet, dadurch gekennzeichnet, daß ein Bereich des Widerstandes (6) sich im wesentlichen dem Umfang der Platte (5) folgend erstreckt, wobei die Enden (6') des Widerstandes sich in Richtung der Mitte (M) des Widerstandes (6) erstrecken und unmittelbar mit der thermischen Begrenzungseinrichtung verbunden sind.

2. Heizplatte nach Anspruch 1, dadurch gekennzeichnet, daß der Widerstand (6) symmetrisch in Bezug auf eine Symmetrieachse (5') der Heizplatte (5) ist.

3. Heizplatte nach Anspruch 1 oder 2, wobei die Heizplatte (5) eine Scheibenform aufweist, dadurch gekennzeichnet, daß der elektrische Widerstand (6) eine quasi-geschlossene Kreisform aufweist, wobei sich die Enden (6') des Widerstandes (6) parallel zu einer Symmetrieachse (5') des Widerstandes erstrecken.

4. Heizplatte nach einem der Ansprüche 1 bis 3, dadurch gekennzeichnet, daß eine Thermodiffusionsplatte (7) zwischen einerseits der Heizplatte (5) und andererseits dem Widerstand (6) und der thermischen Begrenzungseinrichtung (8) befestigt ist.

5. Elektro-Kochkessel mit Heizboden, umfassend einen Behälter (1), unter dem eine thermische Begrenzungseinrichtung (8) und ein elektrischer Widerstand (6) befestigt sind, für zu erhitzende Flüssigkeit mit einer Heizplatte (5) dadurch gekennzeichnet, daß die Heizplatte gemäß einem der Ansprüche 1 bis 4 ist.

6. Elektro-Kochkessel nach Anspruch 5, dadurch gekennzeichnet, daß die thermische Begrenzungseinrichtung (8) darüber hinaus dafür ausgelegt ist, die Temperatur des Bodens (5) zu erfassen und die elektrische Versorgung des Widerstands (6) zu unterbrechen, wenn die erfasste Temperatur einen bestimmten Wert überschreitet.

## Claims

1. An electric hotplate comprising a tubular electric resistance (6) adapted to be fixed beneath the hotplate (5) and extending substantially in a plane parallel thereto, the ends (6') of the resistance (6) being connected to a thermal limiter (8) disposed near the middle of the said resistance (6) and adapted to measure at least the temperature of the resistance and break the power supply to the resistance (6) when the temperature measured exceeds a predetermined value, characterised in that a portion of the resistance (6) extends substantially along the peripheral contour of the hotplate (5), the ends (6') of the resistance extending in the direction of the middle (M) of the resistance (6), and being connected directly to the thermal limiter.

2. A hotplate according to claim 1, characterised in that the resistance is symmetrical in relation to an axis of symmetry (5') of the hotplate (5).

3. A hotplate according to claim 1 or 2, the hotplate (5) having a disc shape, characterised in that the electric resistance (6) has a quasi-closed circular shape, the ends (6') of the resistance (6) extending parallel to an axis of symmetry (5') of the said resistance.

4. A hotplate according to any one of claims 1 to 3, characterised in that a thermal diffusion plate (7) is fixed between the hotplate (5) on the one hand, and the resistance (6) and the thermal limiter (8) on the other hand.

5. An electric kettle with a heated base, comprising a reservoir (1) for liquid for heating, comprising a hotplate (5) beneath which a thermal limiter (8) and an electric resistance (6) are fixed, characterised in that the hotplate is in accordance with any one of claims 1 to 4.

6. An electric kettle according to claim 5, characterised in that the thermal limiter (8) is also adapted to measure the temperature of the base (5) and break the power supply to the resistance (6) when the temperature measured exceeds a predetermined value.
